# EUROPEAN PATENT APPLICATION

(11) **EP 3 799 348 A1**
(43) Date of publication of application: **31.03.2021**
(21) Application number: 20193359.5
(22) Date of filing: 28.08.2020
(51) Int. Cl.: H04L 9/08, G06F 21/60, H04L 9/06

(54) **INFORMATION PROCESSING APPARATUS**

(30) Priority: 25.09.2019 JP 2019174291
(71) Applicant: Hitachi, Ltd., Tokyo 100-8280 (JP)
(72) Inventor: SUZUKI, Manami, Chiyoda-ku, Tokyo 100-8280 (JP); WATANABE, Dai, Chiyoda-ku, Tokyo 100-8280 (JP); TAKAHASHI, Kenta, Chiyoda-ku, Tokyo 100-8280 (JP)
(74) Representative: Mewburn Ellis LLP

(57) **Abstract**

A main storage device stores an OS that allocates a resource for each program, an entropy source collection and delivery program that collects and delivers an entropy source, and a data protection program that performs protection processing of data by using the entropy source delivered by the entropy source collection and delivery program.

## Description

### INCORPORATION BY REFERENCE

This application claims priority based on Japanese patent application, No. 2019-174291 filed on September 25, 2019, the entire contents of which are incorporated herein by reference.

### BACKGROUND

The present invention relates to an information processing apparatus.

As mobile terminals are becoming popular and Web services are becoming more sophisticated, the types of services are becoming diversified. Particularly in recent years, services such as mobile payments related to payments and remittances used via ATMs, counters, and dedicated terminals in the related art are executed on mobile terminals, and these services are showing signs of trends.

When such a service is used, in general, dedicated application software (hereinafter, simply referred to as an "application") is installed and the service is used via this application.

Although it is necessary to perform user authentication (or terminal authentication) when the service is used, confidential information that only a user (or terminal) has is used at this time. Although it is desirable that such processing is performed within a region on a SIM chip, the confidential information is handled on the application as described above in most cases. This is because a storage capacity and a processing capacity of the SIM chip are low in order to install the application for the service.

Meanwhile, the reality is that a certain percentage of terminals are infected with malicious software (malware) from the viewpoint of security of the mobile terminals, and the presence of malware specialized in financial services is confirmed. In particular, the presence of malware that reads data on a memory and extracts credit card encryption is reported, and it is necessary to protect the data on the memory while the application is being executed. As a countermeasure against the above problems, there is a method of encrypting and storing the data on the memory.

For example, JP 2019-74913 A discloses a method of performing encryption when data is stored in a memory without requiring support of special hardware such as a CPU and a memory mechanism. In this method, an application that performs encryption processing generates a key used for encryption within the CPU (hereinafter, simply referred to as a "key").

A value (hereinafter, referred to as an "entropy source") having a fluctuation (hereinafter, referred to as "entropy") sufficient to generate the key is required in the generation of the key. An example of the entropy source having the entropy sufficient to generate the key is a random number generated by a random number generator.

### SUMMARY

In JP 2019-74913 A, the application that encrypts the data on the memory generates the entropy source having the entropy sufficient to generate the key by using an entropy generation source of a CPU, and generates the key by using this value.

However, there are a case where the CPU does not have the random number generator and a case where the CPU has the random number generator but the application that encrypts the data does not have an authority to use the random number generator. In these cases, a countermeasure that the entropy generation source (for example, a device that uses a function with noise within the CPU such as a CPU timer) which has small entropy generated per unit time but is available by the application is repeatedly accessed and the entropy sources are collected is considered.

However, since the entropy obtained from such an entropy generation source within the CPU in a short time is small, it takes a time to collect the entropy sources having sufficient entropy necessary to generate an encryption key.

A method in which an application that encrypts the data on the memory generates the key by using the entropy source generated by another application within the terminal is considered. However, when this method is used, since a communication channel between the applications can be accessed by the malware, this communication channel can be regarded as a public communication channel, and thus, there is a risk that the communication channel is eavesdropped by the malware.

An object of the present invention is to generate an encryption key by acquiring an entropy source having sufficient entropy at a high speed without being eavesdropped by malware when data on a memory is encrypted.

An aspect of the present invention provides an information processing apparatus that performs processing by calculating data and a program stored in a main storage device by means of a CPU while referring to the data and program. The information processing apparatus includes an entropy generation source that is connected to the main storage device via the CPU, and generates an entropy source. The main storage device stores an OS that allocates a resource for each program, an entropy source collection and delivery program that collects and delivers the entropy source, and a data protection program that performs protection processing of the data by using the entropy source delivered by the entropy source collection and delivery program. The entropy source collection and delivery program includes an entropy source collection unit that collects a first entropy source from the entropy generation source, and an entropy source generation and delivery unit that generates a second entropy source which is a pseudo-random number from the first entropy source, and delivers the second entropy source to the data protection program. The data protection program includes an entropy source acquisition unit that acquires the second entropy source delivered by the entropy source collection and delivery program, and generates a third entropy source from the acquired second entropy source, and
a data protection processing unit that performs the protection processing of the data by using the third entropy source.

According to one aspect of the present invention, when data on a memory is encrypted, an encryption key can be generated by acquiring an entropy source having sufficient entropy at a high speed without being eavesdropping by malware.

The details of one or more implementations of the subject matter described in the specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1 is a diagram illustrating a configuration example of a system to which an information processing apparatus (terminal) according to an embodiment is applied;
Fig. 2 is a diagram illustrating an example of a usage form of the system to which the information processing apparatus (terminal) according to the embodiment is applied;
Fig. 3 is a diagram illustrating a functional configuration of the information processing apparatus (terminal) according to the embodiment;
Fig. 4 is a diagram illustrating functional configurations of an entropy source collection and delivery application and a data protection application;
Fig. 5 is a diagram illustrating a functional configuration handled by the entropy source collection and delivery application within the terminal;
Fig. 6 is a processing flow in an entropy source 2 delivery unit of the entropy source collection and delivery application;
Fig. 7 is a diagram illustrating a functional configuration handled by the data protection application within the terminal;
Fig. 8 is a processing flow in an entropy source 3 acquisition unit of the data protection application;
Fig. 9 is a diagram illustrating a delivery image of an entropy source; and
Fig. 10 is a diagram illustrating an image on which a communication channel eavesdropped by malware.

### DESCRIPTION OF THE EMBODIMENTS

In the embodiment, when a CPU does not have a random number generator or the CPU has the random number generator but an application that encrypts the data cannot use the random number generator, in encrypting the data on a memory, an entropy source having sufficient entropy at a high speed is acquired without being eavesdropped by malware, and an encryption key is generated. Thus, the following functions of an OS are used in the embodiment.

The OS appropriately allocates resources for each application by using information within a terminal. When a plurality of applications tries to simultaneously access the same resource, an access order of the applications to the resource varies for each trial.

The application calls an API prepared by the OS, and thus, the OS secures a region in which that the plurality of applications can be accessed within the memory (hereinafter, referred to as a "shared memory region").

Specifically, in the embodiment, the following means are used.

Separate applications have a function of collecting the entropy source from an entropy generation source and a function of encrypting data on the memory.

An application having the function of collecting the entropy source from the entropy generation source (hereinafter, referred to as an "entropy source collection and delivery application") repeatedly performs processing of generating a random number by using the collected entropy source and writing the generated random number to the shared memory region on the memory with an application having the function of encrypting the data (hereinafter, referred to as a "data protection application").

While the entropy source collection and delivery application repeatedly performs the processing of writing the values in the shared memory region, the data protection application repeatedly acquires the values in the shared memory region with the entropy source collection and delivery application. The data protection application generates keys by using the plurality of values acquired from the shared memory region.

According to the embodiment, a timing at which the application can access the shared memory region is determined by the OS at any time. Accordingly, even when malware can access the shared memory region by delivering the entropy source between the applications via the shared memory region, it is difficult for the malware to acquire all the values acquired from the shared memory region in order for the application that encrypts the data on the memory to generate the key.

As a result, it is difficult for the malware to restore the encryption key, and a risk that the malware disables the encryption of the data on the memory can be reduced.

The entropy of the value written in the shared memory region is significantly larger than the entropy of the value generated at one time by the entropy generation source using a function with noise within the CPU. Accordingly, according to the aforementioned method, the number of times the value having the entropy is collected in order to acquire the entropy source having the sufficient entropy in the key generation may be small. Thus, the entropy source sufficient for the key generation can be acquired at a high speed.

Hereinafter, the embodiment will be described with reference to the drawings.

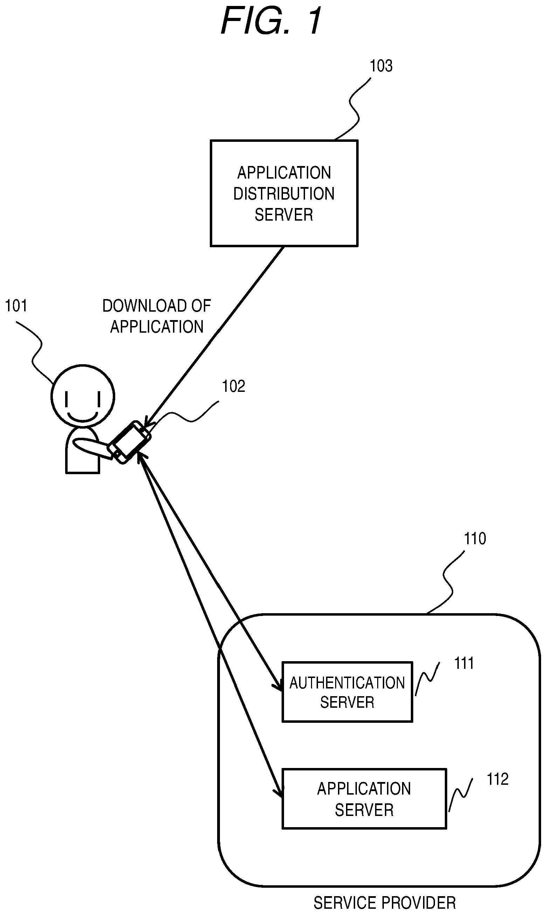

A configuration example of a system to which an information processing apparatus (terminal) according to the embodiment is applied will be described with reference to Fig. 1.

The system includes a user 101 having a network terminal 102 and an application distribution server 103, and the user 101 downloads the application downloaded from the application distribution server 103 to the terminal 102.

The application is used to use a specific service provided by a service provider 110. The user 101 installs the application downloaded from the application distribution server 103 on the terminal 102, and then executes user registration for an authentication server 111. When the service is used, after user authentication (or device authentication) for the authentication server 111 of the service is completed, the service is used through an application server 112.

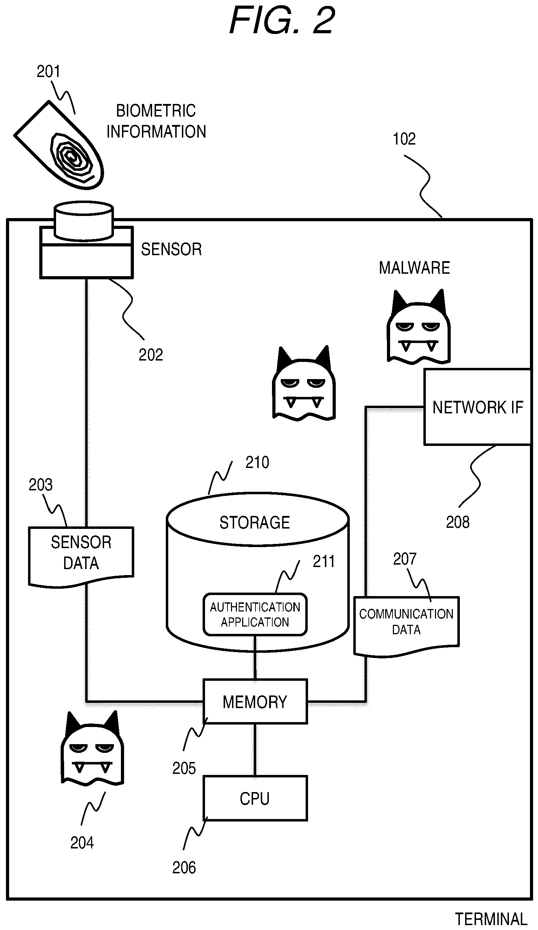

A usage image of the information processing apparatus (terminal) of the embodiment will be described with reference to Fig. 2. Fig. 2 is a diagram illustrating a usage image in which the terminal 102 performs the user authentication for the authentication server 111.

Similarly to a general computer terminal, the terminal 102 includes a CPU 206, a memory 205, and a storage 210, and further includes a sensor 202 that acquires biometric information 201 and a network interface 208 that communicates with the authentication server 111 and the application server 112. An authentication application 211 is stored in the storage 210. When the authentication is executed, the sensor 202 receives sensor data 203 including the biometric information 201 of the user 101, and transmits a result (communication data 207) obtained by performing appropriate processing to the authentication server 111.

The sensor data 203 and the communication data 207 may be encrypted in order to prevent information leakage due to malware infection. In this case, the authentication application 211 shares a key for performing encrypted communication with the sensor 202 and the authentication server 111.

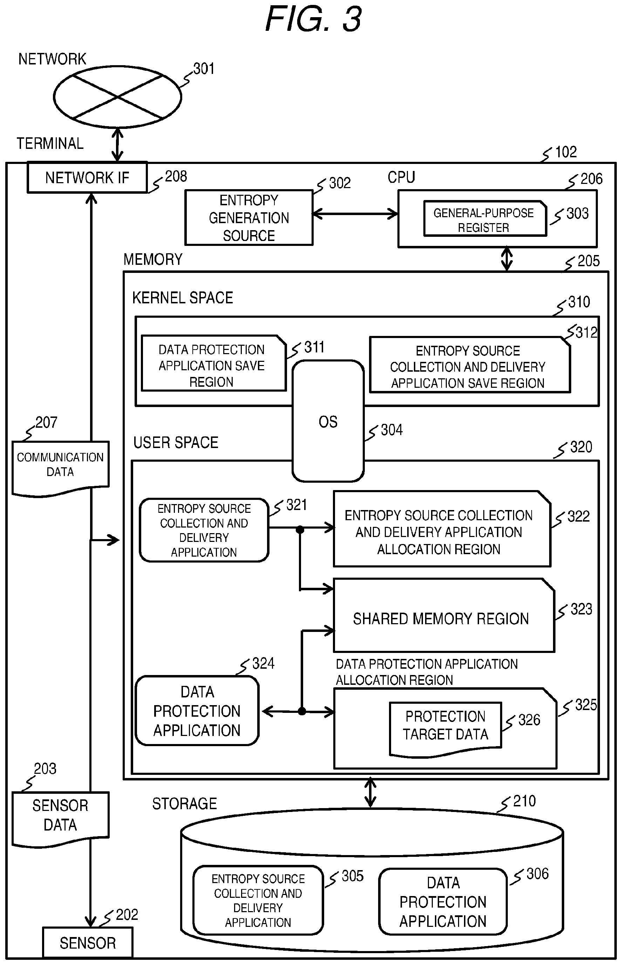

A functional configuration of the information processing apparatus (terminal) of the embodiment will be described with reference to Fig. 3.

The terminal 102 includes the network interface 208 that exchanges information with the outside via a network 301, the sensor 202 that reads physical information such as a camera and a microphone, an entropy generation source 302 such as a physical random number generator, a storage 210 that stores data and programs, the CPU 206 that performs calculation processing, and the memory 205 that retains intermediate data and programs being processed. These functions are connected to each other by a data bus, and data is exchanged via the memory 205.

The CPU 206 retains a plurality of general-purpose registers 303 that stores data handled in the calculation processing. Binary data and setting files of the application are stored on the storage 210. A program called an OS 304 is resident in the memory 205, and performs mediation between hardware and applications and management of execution authorities and resources for the plurality of applications.

A general user application is executed under limited authority called user authority. Meanwhile, processing related to resource management using the OS 304 is executed under a stronger authority. The memory 205 is divided into a user space 320 used by the user application and a kernel space 310 used by main processing of the OS 304.

The entropy source collection and delivery application (entropy source collection and delivery program) 305 and the data protection application (data protection program) 306 stored in the storage 210 are expanded into the user space 320 on the memory when these applications are executed. The entropy source collection and delivery application 305 is executed when the OS is started up, and thereafter remains resident on the memory 205.

The entropy source collection and delivery application (entropy source collection and delivery program) 321 and the data protection application (data protection program) 324 on the memory 205 execute processing by using memory usage regions (for example, an entropy source collection and delivery application allocation region 322 allocated to the entropy source collection and delivery application 321 and a data protection application allocation region 325 allocated to the data protection application 324) in the user space 320 allocated for each application by the OS 304.

The memory usage regions of these applications may be dynamically secured when the applications are executed, or may be dynamically secured when the applications are being executed (via an alloc function provided as a standard library of C language). In general, the OS 304 allocates, as a usage region of the application, a different memory region for each application in the user space 320. However, a shared memory region 323 can be secured by clearly indicating, to the OS 304, that the shared memory region 323 in which the plurality of applications can be accessed in the user space 320 within the memory 205 is secured between the plurality of applications when the application is executed or while the application is being executed.

In the present embodiment, the entropy source collection and delivery application 321 and the data protection application 324 have the shared memory region 323. In the present embodiment, the shared memory region 323 may be secured by the data protection application 324, or may be secured by the entropy source collection and delivery application 321. Thus, in the following description of the present embodiment, the description will be made on the assumption that the data protection application 324 secures the shared memory region 323.

When the plurality of applications is simultaneously executed, a process management function of the OS 304 allocates hardware resources such as the CPU 206 and the memory 205 to a certain application, and appropriately switches the allocation (hereinafter, referred to as "interrupt").

When an interruption occurs, data of the general-purpose register 303 of the applicationbeing executed (hereinafter, referred to as the "application 1") is stored in save regions (for example, a data protection application save region 311 allocated to the data protection application and an entropy source collection and delivery application save region 312 allocated to the entropy source collection and delivery application) on the kernel space 310 assigned to the application 1.

Thereafter, the hardware resource is allocated to the application to which the hardware resource is to be newly allocated (hereinafter, referred to as an "application 2"), and the execution of the application 2 is started. When the execution of the application 2 is completed, the data in the save region of the application 1 is restored by the general-purpose register 303, and the processing of the application 1 is started.

The OS 304 determines the application to which the hardware resource is to be allocated based on time information of as a cycle counter and execution priority information for each application, and performs interruption processing, as necessary.

The entropy source collection and delivery application 321 collects the entropy source from the entropy generation source 302, and delivers the entropy source to the data protection application 324 via the shared memory region 323 with the data protection application 324.

The data protection application 324 acquires the entropy source delivered by the entropy source collection and delivery application 321 via the shared memory region 323, and performs data protection processing of protection target data 326 included in the memory region allocated to the data protection application 324 by using the entropy source.

The protection target data 326 is the sensor data 203 acquired from the sensor 202 and the communication data 207 acquired from the network interface 208. The protection target data 326 may be data stored in the storage 210.

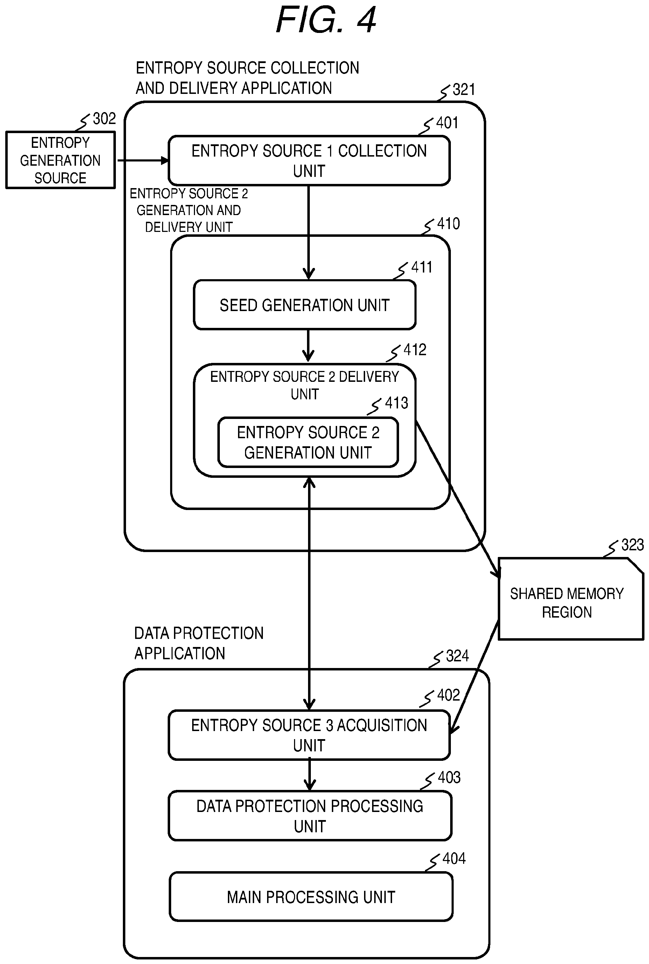

A main functional configuration will be described with reference to Fig. 4.

Fig. 4 illustrates the user space 320 of the memory in Fig. 3 in detail, and illustrates functional configurations of the entropy source collection and delivery application 321 that collects and delivers the entropy source of the present embodiment and the data protection application 324 that performs the data protection processing by using the entropy source delivered by the entropy source collection and delivery application 321. The entropy generation source 302 is connected to the memory 205 via the CPU 206, but the CPU 206 is omitted in Fig. 4.

The entropy source collection and delivery application 321 includes an entropy source 1 collection unit 401 that collects an entropy source 1 from the entropy generation source 302, and an entropy source 2 generation and delivery unit 410 that delivers the entropy source to the data protection application 324 by generating a pseudo-random number (hereinafter, referred to as an "entropy source 2") from the collected entropy source 1 and writing the generated pseudo-random number to the shared memory region 323 with the data protection application 324.

The entropy source 1 collection unit 401 repeatedly accesses the entropy generation source 302 and stores the acquired entropy source 1 in an entropy pool. A timing at which the entropy source 1 collection unit 401 accesses the entropy generation source 302 may be determined within the application.

The entropy source 2 generation and delivery unit 410 includes a seed generation unit 411 that generates seed by using the entropy source 1 within the entropy pool, and an entropy source 2 delivery unit 412 that generates the entropy source 2 from the seed according to a certain rule and writes the seed to the shared memory region 323. The entropy source 2 delivery unit 412 includes an entropy source 2 generation unit 413 that generates the entropy source 2 from the seed by using a pseudo-random number generator.

The data protection application 324 includes a main processing unit 404, an entropy source 3 acquisition unit 402 that acquires the entropy source 2 delivered by the entropy source collection and delivery application 321 according to a certain rule, and generates an entropy source 3 from this acquired value, and a data protection processing unit 403 that performs the data protection processing of the protection target data 326 handled by the main processing unit 404 by using the entropy source 3.

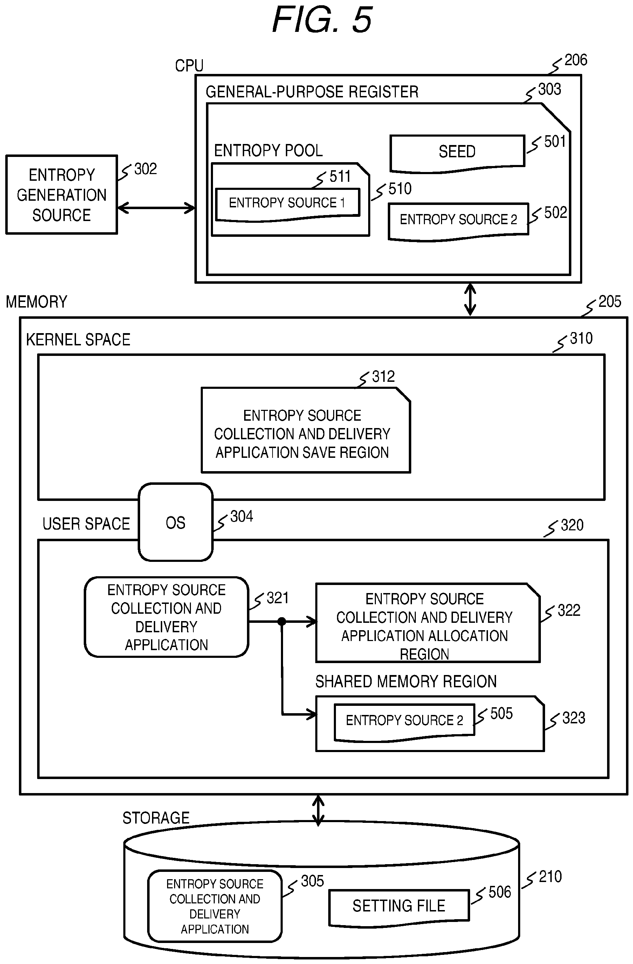

The functional configuration handled within the terminal by the entropy source collection and delivery application 321 will be described with reference to Fig. 5. Fig. 5 is a detailed diagram of Fig. 3 regarding data appearing on the CPU 206 and the memory 205 when the entropy source collection and delivery application 321 is executed.

The entropy source collection and delivery application 305 within the storage 210 is loaded as expanded as the entropy source collection and delivery application 321 in the user space 320 of the memory 205, and the processing of the entropy source collection and delivery application 321 is executed while storing program variables and data being processed in the general-purpose register 303 within the CPU and the entropy source collection and delivery application allocation region 322 on the memory 205.

The general-purpose register 303 has an entropy pool 510, and stores the entropy source 1 (511) acquired from the entropy generation source 302. A seed 501 generated by the seed generation unit 411 and an entropy source 2 (502) generated by the entropy source 2 generation unit 413 of the entropy source collection and delivery application are stored within the general-purpose register 303.

A setting file 506 for sharing information for delivering the entropy source between the entropy source collection and delivery application 305 and the data protection application 306 is stored within the storage 210. An entropy source 2 (505) is stored in the shared memory region 323 by the entropy source collection and delivery application 321.

When the interruption due to another application including malware 204 occurs while the entropy source collection and delivery application 321 is being executed, the data (for example, the entropy source 1 (511), the seed 501, and the entropy source 2 (502) within the entropy pool) on the general-purpose register 303 is stored in the entropy source collection and delivery application save region 312 within the kernel space 310. At this time, the application (for example, the malware 204) executed by the interruption cannot access the data within the entropy source collection and delivery application save region 312.

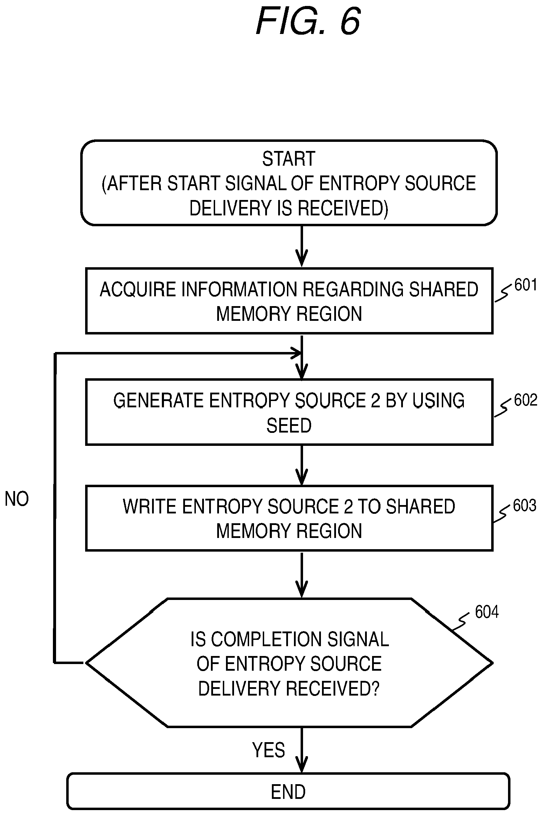

A generation and delivery flow of the entropy source 2 will be described with reference to Fig. 6.

Fig. 6 is a flowchart illustrating an operation of the entropy source 2 delivery unit 412 included in the entropy source collection and delivery application 321 in the present embodiment. A method of generating and delivering the entropy source 2 in the entropy source collection and delivery application 321 will be described with reference to Figs. 5 and 6.

In step 601, the entropy source 2 delivery unit 412 acquires information (for example, an address of the shared memory region 323) for knowing a location of the shared memory region 323 with the data protection application 324 on the memory 205. As this acquisition method, for example, there is a method of creating the setting file 506 that describes the information for knowing the location of this region on the memory 205 and referring to this setting file 506 by the entropy source 2 delivery unit 412 when the data protection application 324 secures the shared memory region 323.

In step 602, the entropy source 2 delivery unit 412 generates the entropy source 2 (502) from the seed 501 on the general-purpose register 303 by using the entropy source 2 generation unit 413. At this time, the seed 501 is generated by the seed generation unit 411 of the entropy source collection and delivery application 321, and the seed generation unit 411 generates the seed 501 by using the entropy source 1 (511) stored within the entropy pool 510 on the general-purpose register 303, and stores the generated seed on the general-purpose register 303.

In step 603, the entropy source 2 delivery unit 412 accesses the shared memory region 323 by using the location information of the shared memory region 323 acquired in step 601, and writes the entropy source 2 (505) to the shared memory region 323. When the location in the shared memory region 323 to which the entropy source 2 delivery unit 412 writes the value is constant and the value of the entropy source 2 (505) written by the entropy source 2 delivery unit 412 is already present in the shared memory region, a value of a new entropy source 2 is completely overwritten on this value.

In step 604, the entropy source 2 delivery unit 412 confirms whether or not a completion signal of the entropy source delivery is received from the data protection application 324. When the completion signal is not received, steps 602 to 603 are repeated.

When the entropy source collection and delivery application 321 secures the shared memory region 323 of the entropy source collection and delivery application 321 and the data protection application 324, only the processing contents in step 601 are different. The specific processing contents of step 601 at this time will be described later.

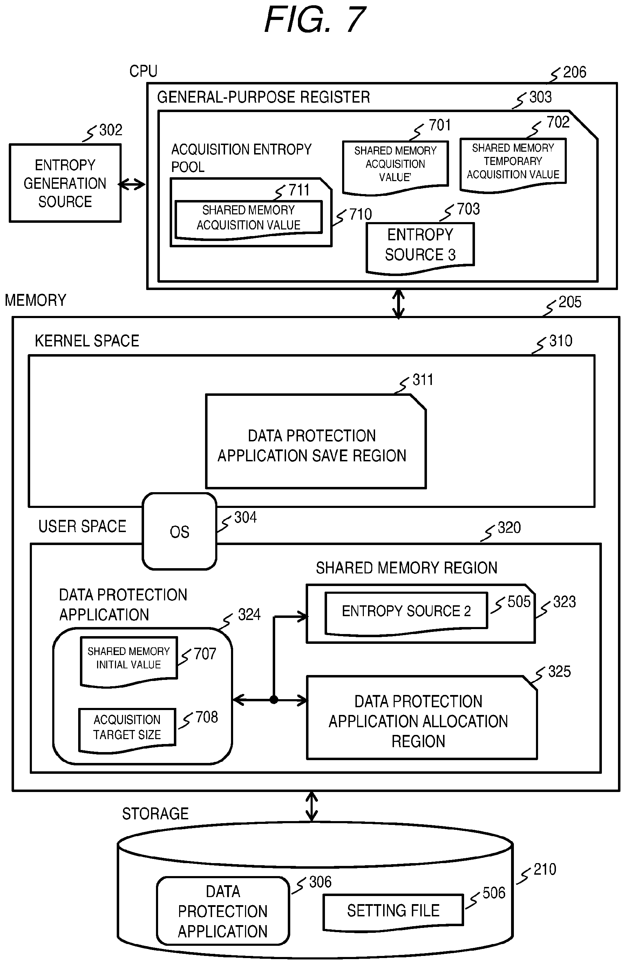

The functional configuration handled within the terminal by the data protection application 324 will be described with reference to Fig. 7.

Fig. 7 is a detailed diagram of Fig. 3 regarding the data appearing on the CPU 206 and the memory 205 when the data protection application 324 is executed.

The data protection application 306 within the storage 210 is expanded as the data protection application 324 in the user space 320 of the memory 205, and the processing of the data protection application 324 is executed while storing the program variables and the data being processed in the general-purpose register 303 within the CPU 206 and the data protection application allocation region 325 on the memory 205.

At this time, a value (shared memory initial value 707) for initializing the shared memory region 323 and a size (acquisition target size 708) of the entropy source 2 acquired by the data protection application 324 are expanded on the memory 205.

A shared memory temporary acquisition value 702 acquired by the entropy source 3 acquisition unit 402 from the shared memory region 323, a shared memory acquisition value' 701, and an entropy source 3 (703) generated by the entropy source 3 acquisition unit 402 are stored in the general-purpose register 303. The general-purpose register 303 has an acquisition entropy pool 710, and stores a shared memory acquisition value 711.

The setting file 506 for sharing information for delivering the entropy source between the entropy source collection and delivery application 305 and the data protection application 306 is stored within the storage 210.

When the interruption due to another application including the malware 204 occurs while the data protection application 324 is being executed, the data (for example, the shared memory acquisition value 711 within the acquisition entropy pool 710, the shared memory acquisition value' 701, the entropy source 3 (703), and the shared memory temporary acquisition value 702) on the general-purpose register 303 is stored in the data protection application save region 311 within the kernel space 310. At this time, the application (for example, malware 204) executed by the interruption cannot access the data within the data protection application save region 311.

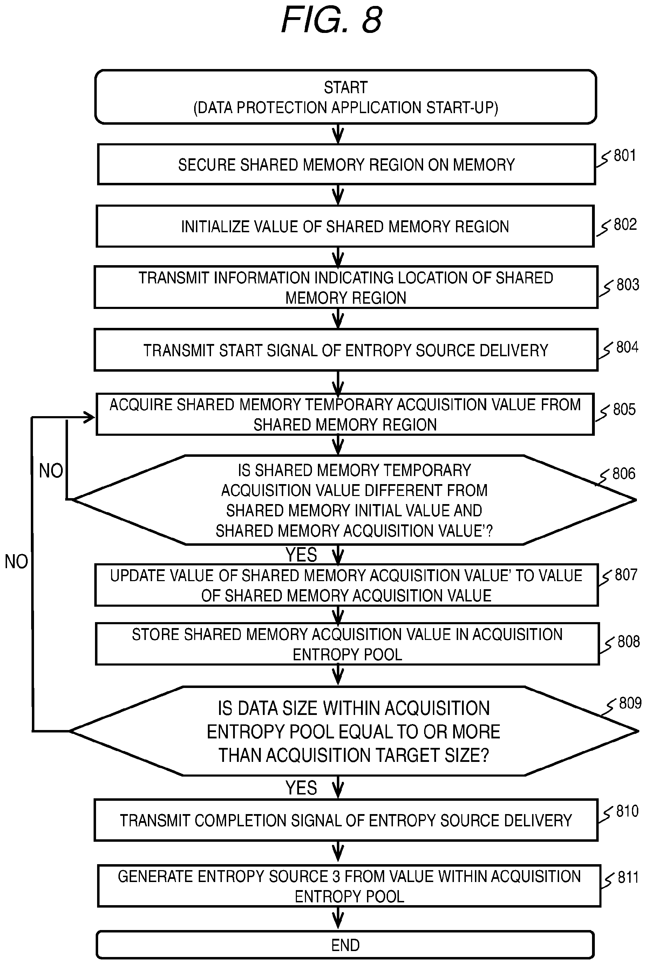

A processing flow of the entropy source 3 acquisition unit 402 will be described with reference to Fig. 8.

Fig. 8 is the processing flow of the entropy source 3 acquisition unit 402 in the data protection application 324 in the present embodiment.

A method of acquiring the entropy source 3 (703) in the data protection application will be described with reference to Fig. 8.

In step 801, the entropy source 3 acquisition unit 402 secures the shared memory region 323 with the entropy source collection and delivery application 321.

In step 802, the entropy source 3 acquisition unit 402 initializes the value of the shared memory region 323 with the entropy source collection and delivery application 321 to the shared memory initial value 707 by using the shared memory initial value 707 defined within the data protection application 324.

In step 803, the entropy source 3 acquisition unit 402 transmits information regarding the information (for example, memory address) for notifying the entropy source collection and delivery application 321 of the location of the shared memory region 323. As an example of this transmission method, for example, there is a method of creating the setting file 506 that describes the information for knowing the location on the memory 205 in the storage 210.

In step 804, the entropy source 3 acquisition unit 402 transmits a start signal of the entropy source delivery to the entropy source collection and delivery application 321.

In step 805, the entropy source 3 acquisition unit 402 acquires, as the shared memory temporary acquisition value 702, the entropy source 2 (505) on the shared memory region 323 secured in step 801, and stores the acquired entropy source on the general-purpose register 303.

In step 806, the entropy source 3 acquisition unit 402 confirms whether or not the shared memory temporary acquisition value 702 acquired in step 805 is a value different from the shared memory initial value 707 or the value (hereinafter, referred to as the "shared memory acquisition value' 701") previously acquired from the shared memory region 323. When the shared memory temporary acquisition value 702 is the same as the shared memory initial value 707 or the shared memory acquisition value' 701, the entropy source 3 acquisition unit 402 repeats step 805.

In step 807, the entropy source 3 acquisition unit 402 updates the value of the shared memory acquisition value' 701 to the value of the shared memory temporary acquisition value 702.

In step 808, the entropy source 3 acquisition unit 402 stores the value of the shared memory temporary acquisition value 702 as the shared memory acquisition value 711 within the acquisition entropy pool 710 on the general-purpose register 303.

In step 809, the entropy source 3 acquisition unit 402 confirms whether or not a data size within the acquisition entropy pool 710 on the general-purpose register 303 is equal to or more than a sufficient size (hereinafter, referred to as an "acquisition target size 708") for use in data protection defined within the data protection application 324. When the data size is insufficient, the entropy source 3 acquisition unit 402 repeats steps 805 to 808. A value defined within the data protection application 324 when the data protection application 324 is downloaded may be used as the acquisition target size 708 at this time, or the acquisition target size may be determined when the data protection application 324 is executed.

In step 810, the entropy source 3 acquisition unit 402 transmits the completion signal of the entropy source delivery to the entropy source collection and delivery application 321.

In step 811, the entropy source 3 acquisition unit 402 generates the entropy source 3 (703) by using the shared memory acquisition value 711 stored within the acquisition entropy pool 710 on the general-purpose register 303, and stores the generated entropy source in the general-purpose register 303. As an example of generating the entropy source 3 (703), there is a method of using a hash function, the entropy source 3 (703) is generated by using an input of the hash function as the value within the acquisition entropy pool and an output of the hash function as the entropy source 3 (703).

When the entropy source collection and delivery application 321 secures the shared memory region 323 of the entropy source collection and delivery application 321 and the data protection application 324, step 601 of Fig. 6 and steps 801 to 803 of Fig. 8 may be exchanged.

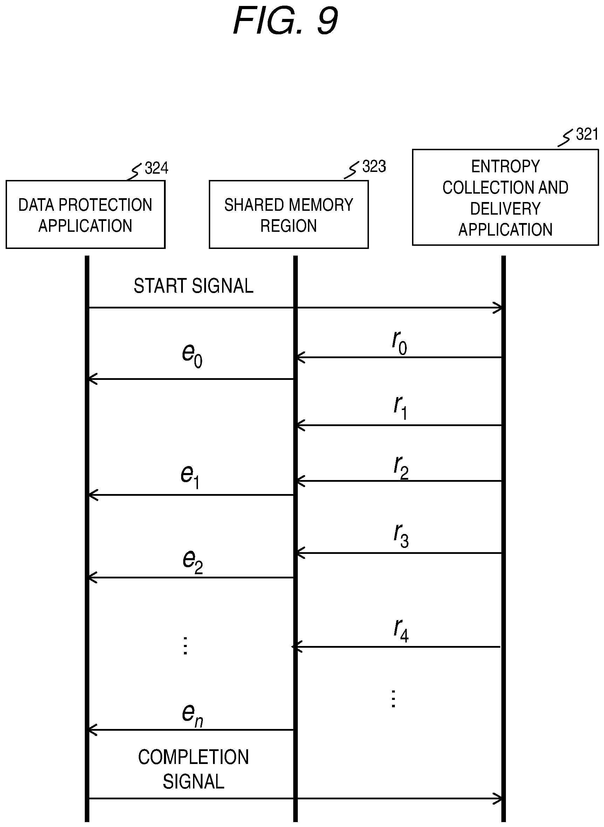

An entropy source 2 delivery image will be described with reference to Fig. 9.

Fig. 9 illustrates a scene in which the entropy source collection and delivery application 321 delivers the entropy source 2 to the data protection application 324 in the present embodiment. A method of delivering the entropy source 2 will be described with reference to Fig. 9.

First, the data protection application 324 transmits the start signal of the entropy source delivery to the entropy source collection and delivery application 321.

Subsequently, the entropy source collection and delivery application 321 generates the entropy sources 2 (r0, r1, ...) and writes the generated entropy sources to the shared memory region 323 until the completion signal of the entropy source delivery is received from the data protection application 324 after the start signal of the entropy source delivery is received from the data protection application 324. At this time, the entropy source collection and delivery application 321 may or may not confirm whether or not the value of the entropy source 2 written to the shared memory region 323 is acquired by the data protection application 324.

Subsequently, the data protection application 324 accesses the shared memory region 323 at any timing, and repeatedly acquires the shared memory temporary acquisition values (e0, e1, ..., en) stored in the shared memory region 323 when the shared memory region is accessed.

When the size of the value within the acquisition entropy pool is equal to or more than the acquisition target size 708, the data protection application 324 transmits the completion signal of the entropy source delivery to the entropy source collection and delivery application 321, and stops the acquisition of the shared memory temporary acquisition value from the shared memory region 323.

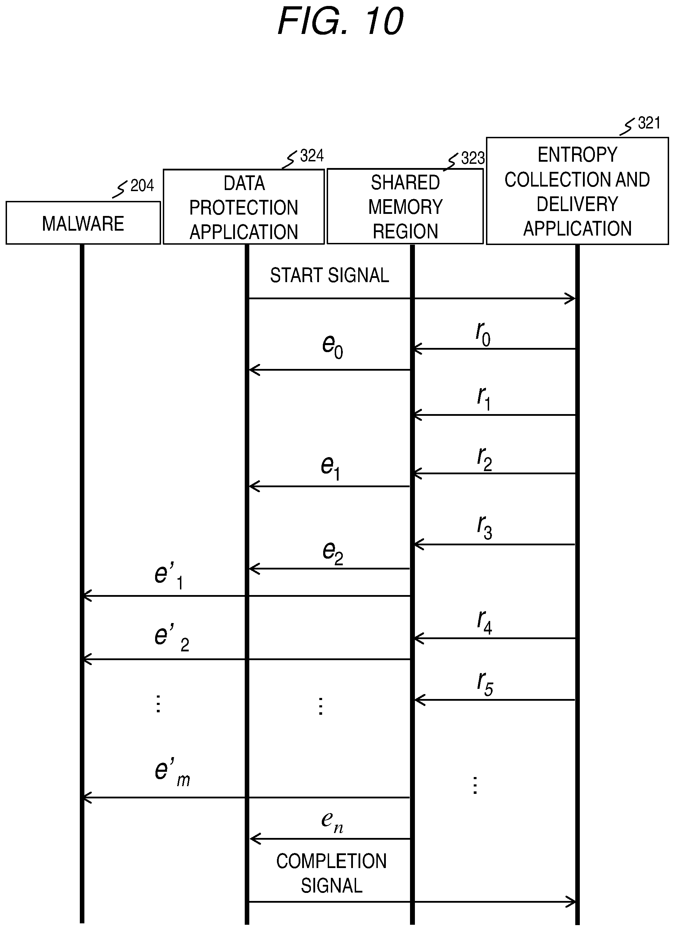

A communication channel eavesdropping image using the malware 204 will be described with reference to Fig. 10.

Fig. 10 illustrates a scene in which a communication channel is eavesdropped by the malware 204 when the entropy source collection and delivery application 321 delivers the entropy source 2 to the data protection application 324 in the present embodiment. An example in which the present embodiment can reduce a risk that the data protection processing is disabled even when the communication channel is eavesdropped by the malware 204 will be described with reference to Fig. 10.

The OS 304 determines the application that can access the resource based on the information within the terminal 102 at any time. Thus, when the plurality of applications repeats processing of giving a request to simultaneously access to the same resource to the OS 304, an access order to the resource is different at any time. Accordingly, while the entropy source collection and delivery application 321 and the data protection application 324 repeatedly access the shared memory region 323, when the malware 204 that can access the shared memory region 323 repeats processing of accessing the shared memory region 323 similarly to these applications, an order of the applications that can access the shared memory region 323 is determined by the OS 304 at any time.

Thus, as illustrated in Fig. 8, when the malware 204 repeatedly acquires the value of the shared memory region 323 similarly to the data protection application 324, a probability that the shared memory temporary acquisition values (e0, e1, .., en) acquired from the shared memory region 323 by the data protection application 324 and values (e'0, e'1, ..., e'm) acquired from the shared memory region 323 by the malware 204 match each other can be low.

Accordingly, the malware 204 can reduce a probability that the data protection application 324 can restore the entropy source 3 used by the data protection processing unit 403. Therefore, according to the present embodiment, the risk that the malware 204 disables a data protection function can be reduced.

In the aforementioned embodiment, separate applications have the function of collecting and delivering the entropy source and the data protection function of encrypting the data on the memory, respectively, and each application delivers and receives the entropy source by using the function of the OS. The application having the function of collecting the entropy source repeatedly collects the entropy source from the entropy generation source, generates the random number from the collected entropy source, and delivers the random number to the application having the data protection function. The application having the data protection function repeats the acquisition of the value delivered by the application having the function of collecting the entropy source, generates the encryption key by using the acquired value, and conceals the data by using the encryption key.

According to the aforementioned embodiment, when the data on the memory is encrypted, the encryption key can be generated by acquiring the entropy source having sufficient entropy at a high speed without being tapped by the malware.

In the aforementioned embodiment, the shared memory region 323 within the memory is used when the entropy source collection and delivery application 321 delivers the entropy source 2 to the data protection application 324. However, the present invention is not limited thereto, and the entropy source collection and delivery application 321 may directly deliver the entropy source 2 to the data protection application 324 by using the function (for example, a message queue, a named pipe, and a socket) provided by the OS 304 in order to transmit and receive the data between the plurality of applications.

In the aforementioned embodiment, the entropy source collection and delivery application 321 and the data protection application 324 are arranged within the same terminal 102. However, the present invention is not limited thereto, and the entropy source collection and delivery application 321 and the data protection application 324 may be distributed and arranged in two terminals connected via the network 301, respectively. In this case, the entropy source collection and delivery application 321 delivers the entropy source 2 to the data protection application 324 by using the network 301.

Although the present disclosure has been described with reference to example embodiments, those skilled in the art will recognize that various changes and modifications may be made in form and detail without departing from the spirit and scope of the claimed subject matter.

## Claims

1. An information processing apparatus that performs processing by calculating data and a program stored in a main storage device by means of a CPU while referring to the data and program,
wherein the information processing apparatus includes
an entropy generation source that is connected to the main storage device via the CPU, and generates an entropy source,
the main storage device stores
an OS that allocates a resource for each program,
an entropy source collection and delivery program that collects and delivers the entropy source, and
a data protection program that performs protection processing of the data by using the entropy source delivered by the entropy source collection and delivery program,
the entropy source collection and delivery program includes
an entropy source collection unit that collects a first entropy source from the entropy generation source, and
an entropy source generation and delivery unit that generates a second entropy source which is a pseudo-random number from the first entropy source, and delivers the second entropy source to the data protection program, and
the data protection program includes
an entropy source acquisition unit that acquires the second entropy source delivered by the entropy source collection and delivery program, and generates a third entropy source from the acquired second entropy source, and
a data protection processing unit that performs the protection processing of the data by using the third entropy source.

2. The information processing apparatus according to claim 1, wherein
the OS delivers the second entropy source from the entropy source collection and delivery program to the data protection program.

3. The information processing apparatus according to claim 1, wherein
when a plurality of the programs including the entropy source collection and delivery program, the data protection program, and malware repeatedly tries to simultaneously access the same resource, the OS changes an access order of the programs to the resource for each try.

4. The information processing apparatus according to claim 3, wherein
when an interruption due to the plurality of programs including the malware occurs while the entropy source collection and delivery program is being executed,
the OS saves the first entropy source and the second entropy source in an entropy source collection and delivery program save region within a kernel space within the main storage device, and
prohibits the malware executed by the interruption from accessing the entropy source collection and delivery program save region.

5. The information processing apparatus according to claim 3, wherein
when an interruption due to the plurality of programs including the malware occurs while the data protection program is being executed,
the OS saves the third entropy source in a data protection program save region within a kernel space within the main storage device, and
prohibits the malware executed by the interruption from accessing the data protection program save region.

6. The information processing apparatus according to claim 1, wherein
the main storage device includes
a shared memory region accessible by a plurality of the programs including the entropy source collection and delivery program and the data protection program,
the entropy source collection and delivery program writes the second entropy source to the shared memory region, and
the data protection program acquires the second entropy source written to the shared memory region.

7. The information processing apparatus according to claim 6, wherein
the plurality of programs includes malware, and
the OS determines a timing at which the shared memory region is accessible by the plurality of programs at any time.

8. The information processing apparatus according to claim 1, wherein
the entropy source generation and delivery unit includes
a seed generation unit that generates a seed by using the first entropy source, and
an entropy source delivery unit that generates the second entropy source from the seed, and delivers the generated second entropy source to the data protection program.

9. The information processing apparatus according to claim 8, wherein
the entropy source delivery unit includes an entropy source generation unit that generates the second entropy source from the seed by using a pseudo-random number generator.

10. The information processing apparatus according to claim 1, wherein
the entropy source collection unit repeats processing of accessing the entropy generation source and storing the acquired first entropy source in an entropy pool of a general-purpose register of the CPU.
